# EUROPEAN PATENT SPECIFICATION

(11) **EP 2 266 932 B1**
(45) Date of publication and mention of the grant of the patent: **31.07.2013**
(21) Application number: 09724415.6
(22) Date of filing: 26.03.2009
(51) Int. Cl.: C04B 35/478, C04B 35/626, C01G 23/00, C04B 38/00, F01N 3/022

(54) **POROUS CERAMIC MEMBER AND FILTER**
PORÖSES KERAMIKELEMENT UND FILTER
ÉLÉMENT EN CÉRAMIQUE POREUSE ET FILTRE

(30) Priority: 26.03.2008 JP 2008080834; 26.03.2008 JP 2008080837
(43) Date of publication of application: 29.12.2010
(73) Proprietor: Kyocera Corporation, Kyoto-shi Kyoto 612-8501 (JP); Honda Motor Co., Ltd., Minato-ku Tokyo 107-8556 (JP)
(72) Inventor: SHIGEOKA, Toshiaki, Kirishima-shi Kagoshima 899-4312 (JP); TATEYAMA, Yasuharu, Kirishima-shi Kagoshima 899-4312 (JP); NISHIKAWA, Yusuke, Kirishima-shi Kagoshima 899-4312 (JP); KOHSAKA, Shoji, Kirishima-shi Kagoshima 899-4312 (JP)
(74) Representative: Banzer, Hans-Jörg
(86) International application number: PCT/JP2009/056142
(87) International publication number: WO 2009/119748

(56) References cited:
- EP-A1- 1 741 684
- EP-A1- 2 221 287
- JP-A- 7 277 819
- JP-A- 11 009 925
- JP-A- 11 114 336
- JP-A- 57 003 767
- JP-A- 2006 096 634
- JP-T- 2005 502 570
- US-A1- 2007 119 135

## Description

### Technical Field

The present invention relates to a porous ceramic member and a filter. For example, the present invention relates to a porous ceramic member that can be used for filter elements such as heat insulating materials, supporting materials of high-temperature members, honeycomb structures for an automotive exhaust gas catalyst carrier, honeycomb structures for particulate trapping (removal of particulate substances) of diesel engine vehicles, honeycomb structures for consumer uses such as deodorization and warm air and the like and method for manufacturing the same, and a filter.

### Background Art

Heretofore, low thermal expansion ceramic materials such as cordierite, lithium aluminosilicate (popular name: LAS) of β-eucryptite and β-spodumene, aluminum titanate and the like have been used as honeycomb structures of thermal shock resistant members.

The low thermal expansion ceramic materials commonly mean ceramics having a thermal expansion coefficient at 20°C to 800°C of 3.0 × 10⁻⁶/°C or less, and these low thermal expansion ceramic materials have been known for a long time as materials having excellent thermal shock resistance. Recently, the low thermal expansion ceramic materials have been used as materials of portions to which thermal shock resistance is required, for example, honeycomb carriers for automotive exhaust gas catalysts, housings and heat exchange materials of ceramics gas turbine and the like.

In particular, cordierite (2MgO·2Al₂O₃·5SiO₂) has widely put into practice as a honeycomb carrier for an automotive exhaust gas catalyst since it has excellent thermal shock resistance.

However, since cordierite has a heat resisting temperature is about 1,350°C at highest, it was difficult to use at this temperature or higher.

In contrast, aluminum titanate (Al₂TiO₅) is a low thermal expansion ceramic material that has a high melting point such as 1860°C and also has higher heat resistance than that of cordierite. However, aluminum titanate has a problem that it is thermally decomposed into alumina and titania when kept at the temperature of 900°C to 1,200°C, and thus there was a limitation on use.

Therefore, in order to enhance thermal decomposition resistance of aluminum titanate, it has been studied to add additives such as SiO₂, Fe₂O₃, Al₂O₃, TiO₂, MgO, CaO and the like to an Al₂O₃ powder and a TiO₂ powder (see, for example, Patent Document 1). This Patent Document 1 describes that additives such as SiO₂, Fe₂O₃, Al₂O₃, TiO₂, MgO, CaO and the like were added to the Al₂O₃ powder and the TiO₂ powder, followed by molding and further firing at 1,450 to 1,550°C.

There has hitherto been known a sintered body in which a sintered body strength and low thermal expansion properties have been improved by adding MgO and SiO₂ to an Al₂TiO₅ raw powder having mean particle diameter of 1.54 to 8.06 µm, followed by molding and further firing at 1,500°C (see Patent Document 2).
Patent Document 1: JP 8-290963A
Patent Document 2: JP 1-249657A
EP 2 221 287 A1, whcih constitutes prior art under Art. 54(3) EPC, discloses a porous ceramic member according to the preamble of claim 1.

### Disclosure of the Invention

### Problems to be Solved by the Invention

Heretofore, it has commonly been performed that additives such as SiO₂, Fe₂O₃, Al₂O₃, TiO₂, MgO, CaO and the like are added to an Al₂O₃ powder and a TiO₂ powder, followed by molding and further firing at about 1,500°C. In such a manner, when SiO₂ constituting an amorphous material is added to an Al₂O₃ powder and a TiO₂ powder and, at the same, the mixture is fired, the obtained sintered body has a small porosity and also has a small mean pore diameter. Therefore, in order to use as a filter element, it was required to add a pore-forming material, followed by firing.

Therefore, as described in Patent Document 1, when additives such as SiO₂ and Fe₂O₃ are added to an Al₂O₃ powder and a TiO₂ powder and the mixture is molded and fired at 1,450 to 1,550°C, SiO₂, Al₂O₃ and MgO are easily mixed to form a large amount of an amorphous material, and thus the strength is improved. However, since the porosity and the mean pore diameter decreases, it was necessary to add a pore-forming material and to fire so as to be used as a filter element.

As described in Patent Document 2, when MgO and SiO₂ are added to an Al₂TiO₅ raw powder having a mean particle diameter of 1.54 to 8.06 µm, followed by molding and further firing at a high temperature such as 1,500°C, a large amount of Al and Mg in Al₂TiO₅ particles diffuse into the grain boundary between the Al₂TiO₅ particles and the content of an amorphous material increases, resulting in increase of the strength. However, since the porosity and mean pore diameter decrease, it was necessary to add a pore-forming material and to fire the mixture so as to use as a filter element.

An object of the present invention is to provide a porous ceramic member having a large porosity and a large mean pore diameter, and a method for manufacturing the same, and a filter.

### Means for Solving the Problems

The present invention provides a porous ceramic member as defined in claim 1. The dependent claims define preferred embodiments of the invention. The present inventors have found that a porous ceramic member having a porosity of 35% or more and a mean micro pore diameter of 5 µm or more can be obtained by joining aluminum titanate type crystal powders having a mean particle diameter of 25 µm or more to each other with an amorphous material containing Si, thus leading to the present invention.

A porous ceramic member of the present invention is characterized by joining crystal particles of aluminum titanate type one another with an amorphous material containing Si, the crystal particles containing Al, Ti, Mg and O and having a mean particle diameter 25 µm or more. And a porosity of the porous ceramic member is 35% or more and a mean pore diameter of the porous ceramic member is 5 µm or more.

In such a porous ceramic member large pores can be formed and the ceramic member has a sufficient porosity. Therefore, for example, when used as a filter element, it can sufficiently transmit a gas.

The porous ceramic member of the present invention is characterized by containing 10.5 atomic % or more of Al and 9 atomic % or more of Mg in the center portion of the crystal particle and the outer peripheral portion outside the center portion, respectively, wherein each of the contents of Al and Mg that exist in the outer peripheral portion of the crystal particle is more than each of the contents of Al and Mg that exist in the center portion of the crystal particle.

Since such a porous ceramic member contains 10.5 atomic % or more of Al and 9 atomic % or more of Mg in the center portion and the outer peripheral portion of the crystal particle, respectively, the porous ceramic member contains a large amount of a solid solution of aluminum titanate and magnesium titanate with high chemical resistance, thus making it possible to improve the chemical resistance. Also, since a large amount of Al and Mg exist in the outer peripheral portion of the crystal particle, the solid solution of aluminum titanate and magnesium titanate has high chemical resistance, thus making it possible to improve the chemical resistance in the outer peripheral portion of the crystal particle. Therefore, even when an acid such as H₂SO₄ in an exhaust gas is contacted with the crystal particle, dissolution of the outer peripheral surface of the crystal particle is suppressed, thus making it possible to improve the chemical resistance. For example, even when cracking arises in an aluminum titanate type crystal particle and an acid such as H₂SO₄ in an exhaust gas is contacted with the fracture surface of the particle, it is possible to improve the chemical resistance since a large amount of Al and Mg is also contained in the center portion of the crystal particle.

Furthermore, the porous ceramic member of the present invention is **characterized in that** pores having a pore diameter of 2 µm or less accounts for 5% or less of all pores. Since such a porous ceramic member does not contain a lot of small pores, it is possible to suppress clogging in pores when used as a filter element. Taking clogging into consideration, since it is not necessary to design a lot of pores in advance, a filter element having a high strength can be obtained.

The porous ceramic member of the present invention is characterized in that a micro pore volume is 0.40 × 10⁻⁶ m³/kg or less when micro pores are analyzed by a nitrogen gas adsorption method. Since such a porous ceramic member has a small micro pore volume, it is possible to improve the strength.

Furthermore, the porous ceramic member of the present invention is characterized by contains Si in an amount of 2 to 5% by mass in terms of SiO₂. Such a porous ceramic member contains Si in an amount of 2 to 5% by mass in terms of SiO₂, it is possible to sufficiently join aluminum titanate type crystal particles to each other with an amorphous material containing Si, thereby making it possible to increase the strength. Since the porous ceramic member contains a small amount of Si, it is possible to suppress a decrease in porosity and to further suppress a decrease in mean pore diameter.

The porous ceramic member of the present invention is characterized by containing Fe in the crystal particles. In such a porous ceramic member, it is possible to suppress decomposition due to heat and to improve the heat resistance.

The method for manufacturing a porous ceramic member of the present invention is characterized by including the steps of calcining a mixed powder containing an Al source powder, a Ti source powder and a Mg source powder at 1,400°C or higher to prepare an aluminum titanate type crystal powder having a mean particle diameter 25 µm or more; adding a SiO₂ powder to the aluminum titanate type crystal powder to prepare a raw powder; forming a green body containing the raw powder; and firing the green body at the temperature that is lower than that of a calcining temperature.

In the method for manufacturing a porous ceramic member of the present invention, since a firing temperature is lower than the calcining temperature (1400°C or higher) of a mixed powder that forms an aluminum titanate type crystal containing Al, Ti and Mg, it is possible to join crystal particles to each other with an amorphous material containing Si. Since aluminum titanate type crystal particles, each having a mean particle diameter of 25 µm or more, are joined to each other with an amorphous material, it is possible to produce a porous ceramic member having a porosity of 35% or more and a mean pore diameter of 5 µm or more without using a pore-forming material. Furthermore, interdiffusion between crystal particles of elements such as Al, Mg, Si and the like and an amorphous material can be suppressed, and thus it becomes possible to obtain aluminum titanate type crystal particles close to the designed value and to obtain properties close to the designed value, such as heat resistance, thermal decomposition resistance and the like.

The filter of the present invention is characterized by including a filter element composed of the above porous ceramic member. In such a filter, the porous ceramic member has large pores and a sufficient porosity, thus making it possible to sufficiently transmit a gas and to improve filter properties.

### Effects of the Invention

In the porous ceramic member of the present invention large pores can be formed and the porous ceramic member have a sufficient porosity. Therefore, for example, when used as a filter element, it is possible to sufficiently transmit a gas. It is possible to improve filter properties by using such a porous ceramic member as a filter element.

In the method for manufacturing a porous ceramic member of the present invention, since a firing temperature is lower than a calcining temperature of an aluminum titanate type crystal containing Al, Ti and Mg, it is possible to join crystal particles to each other with an amorphous material containing Si without using a pore-forming material, and thus it becomes possible to produce a porous ceramic member having a porosity of 35% or more and a mean pore diameter of 5 µm or more. Also, it is possible to suppress interdiffusion between crystal particles of elements such as Al, Mg, Si and the like and an amorphous material can be suppressed, and thus it becomes possible to obtain crystal particles close to the designed value, and to obtain aluminum titanate type crystal particles having heat resistance and thermal decomposition resistance close to the designed value.

### Brief Description of the Drawings

Fig. 1 is a perspective view showing a honeycomb structure (filter element) using a porous ceramic member of the present invention.
Fig. 2 is an explanatory view showing a microstructure of the porous ceramic member of the present invention.

### Mode for Carrying Out the Invention

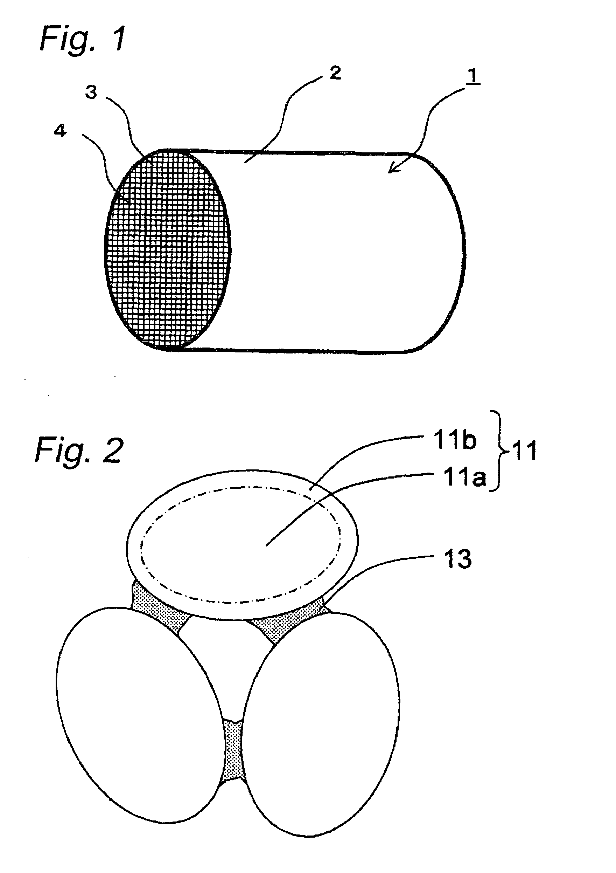

Fig. 1 shows an example of a filter element 1, in which quadrangular prism-shaped gas flow passages 3 are formed in a height direction (axial direction) of a columnar porous ceramic surrounded with an outer peripheral wall 2, and a partition 4 therebetween is porous. Fig. 1 shows a honeycomb structure including a quadrangular prism-shaped cell as a basic structure, a plurality of the quadrangular prism-shaped cells being arranged. However, the filter element 1 of the present invention is not limited to a filter element including the quadrangular prism-shaped cell as the basic structure. For example, the filter element also has a shape other than a honeycomb. Even in the case of the honeycomb structure, the cell shape may be triangle, hexagon, lozenge, or a mixture thereof.

It is also possible to use as a filter element by entirely or partially closing in an opening direction of a honeycomb thereby forming a sandwiched structure to impart impact resistance. A filter element may be sometimes formed by adding a catalyst to a porous ceramic member. The filter of the present invention is formed by including filter element in a container.

The porous ceramic member of the present invention is obtained by joining aluminum titanate type (may be sometimes referred to as a pseudo-brookite type) crystal particles, each having a mean particle diameter 25 µm or more and containing Al, Ti, Mg and O, to each other with an amorphous material containing Si. It is preferred that the aluminum titanate type crystal particles further contain Fe. Whereby, decomposition of crystal particles due to heat is suppressed, thus making it possible to improve the heat resistance

The aluminum titanate type crystal includes, for example, an aluminum titanate type crystal in which the composition formula by a molar ratio is represented by Al₂₍₁₋ₓ₎MgₓTi₍₁₊ₓ₎O₅ (0.5 ≤ x ≤ 0.8).

As shown in Fig. 2, aluminum titanate type crystal particles 11 are joined to each other with an amorphous material 13 containing Si. The amorphous material 13 contains, in addition to Si, Al and Mg. These Al and Mg diffused from a crystal particle 11.

A mean particle diameter of the aluminum titanate type crystal particles 11 is adjusted to 25 µm or more. Since the aluminum titanate type crystal particle has such a large mean particle diameter, it is possible to increase the porosity and to increase the mean pore diameter. When the mean particle diameter of the crystal particle 11 is less than 25 µm, it is impossible to increase the porosity and the mean pore diameter. It is desired that the mean particle diameter of the crystal particle 11 is 40 µm or more, and particularly 50 µm or more.

When the filter element is formed of a porous ceramic member, it is desired that the mean particle diameter of the crystal particle 11 is 70 µm or less, and particularly 60 µm or less, in view of the fact that particles are completely captured or it is easy to extrude into a honeycomb shape, and less deformation occurs during firing. The mean particle diameter can be determined by an intercept method.

Furthermore, in the present invention, the porosity of the porous ceramic member is adjusted to 35% or more and the mean pore diameter is adjusted to 5 µm or more. The porosity can be measured by a mercury penetration method or the Archimedes method, and the mean pore diameter can be measured by a mercury penetration method.

Herein, the reason why the porosity was adjusted to 35% or more is that it is impossible to sufficiently transmit a gas when the porosity is less than 35%. Alternatively, the size of components must be increased so as to ensure a passage of a gas in the amount required for the filter element. It is particularly desired that the porosity is 38% or more. In order to accommodate a porous ceramic member in a metal tube through which an exhaust gas passes, in an airtight manner, the porous ceramic member may be clamped. In view of obtaining the strength enough to prevent breakage due to this clamping force, it is desired that the porosity is 60% or less, and particularly 50% or less.

The reason why the mean pore diameter was adjusted to 5 µm or more is that, when the mean pore diameter is less than 5 µm, the filter element is likely to cause clogging and it becomes impossible to obtain a sufficient transmission amount of a gas as an operating times increases. It is desired that the mean pore diameter is particularly 10 µm or more. In view of completely capturing particles when the filter element is formed of a porous ceramic member, it is desired that the mean pore diameter is 33 pm or less, and particularly 25 µm or less.

In the porous ceramic member of the present invention, it is desired that pores having a pore diameter of 2 µm or less accounts for 5% or less of all pores. Whereby, it is possible to increase the strength, and to suppress clogging in pores when used as a filter element. It is particularly desired that pores having a pore diameter of 2 µm or less accounts for 2% or less of all pores.

It is desired that the porous ceramic member of the present invention contains Si in the amount of 2 to 5% by mass in terms of SiO₂ based on the total amount. By adjusting the amount of Si within a range from 2 to 5% by mass in terms of SiO₂ based on the total amount, it is possible to sufficiently connect aluminum titanate type crystal particles to each other with an amorphous material containing Si, and to increase the strength. Since the porous ceramic member contains a small amount of Si, it is possible to suppress a decrease in porosity and mean pore diameter. The amount of Si can be measured by fluorescent X-ray spectroscopy or inductively coupled plasma (ICP) emission spectrometry.

It is desired that the porous ceramic member of the present invention contains 10.5 atomic % or more Al and 9 atomic % or more of Mg in the center portion 11a of the crystal particle 11 and the outer peripheral portion 11b outside the center portion 11a, respectively. Whereby, a large amount of a solid solution of aluminum titanate as an aluminum titanate type crystal having high chemical resistance and magnesium titanate is also contained in the center portion of the crystal particle. For example, even when cracking arises in an aluminum titanate type crystal particle and an acid such as H₂SO₄ in an exhaust gas is contacted with the fracture surface of the particle, the dissolution is suppressed, thus making it possible to improve the chemical resistance

A large amount of Mg and Al exist in the outer peripheral portion 11b of the crystal particle 11, and a large amount of Ti and Fe exist in the center portion 11a of the crystal particle 11. Since elements in the crystal particle 11 are seggregated and a large amount of Mg and Al exist in the outer peripheral portion 11b of the crystal particle 11 as described above, regarding the outer peripheral portion 11b of the crystal particle 11, a large amount of a solid solution of aluminum titanate as an aluminum titanate type crystal that exhibits low thermal expansion and magnesium titanate as an aluminum titanate type crystal having high chemical resistance is contained in the outer peripheral portion 11b of the crystal particle. Whereby, even when an acid such as H₂SO₄ in an exhaust gas is contacted with the outer peripheral surface of the crystal particle 11, the dissolution of the outer peripheral surface of the crystal particle 11 is suppressed, thus making it possible to improve the chemical resistance.

It is particularly desired that the amount of Mg and Al contained in the outer peripheral portion 11b of the crystal particle 11 is at least 1 atomic % more than that contained in the center portion 11a

The amounts of elements in the outer peripheral portion 11b and the center portion 11a of the crystal particle 11 can be determined by energy dispersive X-ray spectroscopy (EDS). Herein, the outer peripheral portion 11b in the crystal particle 11 refers to the region located 1 µm away from the surface of the crystal particle 11, and the center portion 11a refers to the region excluding the outer peripheral portion 11b.

In the present invention, it is desired that a pore volume when micro pores are analyzed by a nitrogen gas adsorption method is 0.40 × 10⁻⁶ m³/kg or less. In the present invention, since a firing temperature is lower than a calcining temperature, sintering does not sufficiently proceeds, and there is formed a microstructure in which plural aluminum titanate type crystals exist in one crystal particle and these crystals are connected by a neck. Although microcracks occur in plural crystals constituting the crystal particle during firing, since plural crystals are small, the pore volume when micro pores are analyzed by a nitrogen gas adsorption method is a small volume of 0.40 × 10⁻⁶ m³/kg or less and cracking that divides the crystal particle is less likely to occur, thus making it possible to increase the strength of a porous ceramic member.

Furthermore, the porous ceramic member of the present invention preferably contains Fe in the crystal particle. The aluminum titanate type crystal containing Fe includes, for example, iron titanate and is combined with the above aluminum titanate and magnesium titanate to form a complete solid solution. For example, there is a crystal composed of three components of aluminum titanate, magnesium titanate and iron titanate so that the composition formula is represented by the formula: Al_{2(1-x-y)}MgₓFe_{2y}Ti₍₁₊ₓ₎O₅ (0.5 ≤ x ≤ 0.8, 0.05 S y ≤ 0.2). In the porous ceramic member of the present invention, when using an aluminum titanate type crystal in which three components of aluminum titanate-magnesium titanate-iron titanate are solid-soluted, since this crystal is a thermochemically stable component, decomposition of the crystal due to heat is suppressed, thus making it possible to improve the thermal decomposition resistance.

The method for manufacturing a porous ceramic member of the present invention will be described below.

Herein, an example of a method for manufacturing a honeycomb structure (filter element) to be used for exhaust gas purification of a vehicle among porous ceramic members will be described specifically.

For example, raw materials required to form a solid solution represented by the formula: Al₂₍₁₋ₓ₎MgₓTi₍₁₊ₓ₎O₅ are prepared. Although Fe may be sometimes solid-soluted in this solid solution, the case where Fe is not solid-soluted will be described herein.

For example, an alumina raw material, a titania raw material and a magnesium carbonate raw material are compounded and mixed so as to obtain a predetermined composition. If a solid solution of the above composition formula can be formed, raw materials such as hydroxide, nitrate and the like may be used in addition to raw materials such as metal oxide, carbonate and the like, and these compounds may also be used.

It is desired to use, as the alumina raw material, titania raw material and magnesium carbonate powder, raw materials having high purity, purity of 99.0% or more, and particularly 99.5% or more.

A mixed raw material of the above alumina raw material, titania raw material and magnesium carbonate is granulated. Granulation may be performed by mixing in a dry method, or components are charged in a mill such as a rotary mill, a vibrating mill, a beads mill or the like, wet-mixed with at least one kind of water, acetone and isopropyl alcohol (IPA) to obtain a slurry, which is then dried and granulated. The obtained slurry may be placed in a container, dried with heating and then granulated. Granulation may be performed by drying using a spray dryer, or granulation may be performed by heating using the other method. A granulated powder having a mean particle diameter of 50 to 300 µm is prepared.

Then, the granulated powder is calcined in an oxygen-containing atmosphere, for example, atmospheric air. In order to sufficiently produce aluminum titanate type crystals, calcination is performed at 1,400°C or more, that is higher than the temperature (about 1,200°C) at which an aluminum titanate type crystal is produced, for 1 to 5 hours. The calcining temperature is particularly desirably 1,450°C or more, and more desirably 1,470°C or more. In view of the prevention of firm aggregation of a calcined powder, the calcining temperature is desirably 1,500°C or less. Thus, aluminum titanate type crystal powder containing Al, Mg and Ti solid-soluted therein. A powder composed almost completely of the aluminum titanate type crystal (100%) is made by calcination.

This calcined powder is passed through a mesh to obtain a calcined powder having a particle diameter of 25 µm or more, and particularly from 40 to 60 µm. The aluminum titanate type crystal powder scarcely causes grain growth by firing, and the diameter is nearly the same as that of calcined powder.

To the aluminum titanate type crystal powder, a SiO₂ powder is added, followed by mixing. The mixing method can be a wet mixing method, and also can be a wet method. A powder having a mean particle diameter of 1 to 3 µm is used as the SiO₂ powder. It is possible to uniformly disperse a SiO₂ powder on the surface of an aluminum titanate type crystal powder containing Al, Mg and Ti solid-soluted therein, using a powder having a particle diameter within the above range. It is possible to uniformly adhere on and disperse in a crystal powder by adding a mixture of a SiO₂ powder to a binder and kneading the mixture.

To this mixed powder, a forming aid is added and the mixture is formed into a honeycomb shape by extrusion molding using a dice. The obtained green body was sufficiently dried and fired in an oxidative atmosphere at the temperature lower than the calcining temperature, for example, lower than 1,400°C for 0.5 to 5 hours, and thus a porous ceramic member having a honeycomb shape can be formed. The firing temperature is desirably from 1,300 to 1,390°C in view of suppressing the amount of Al and Mg in the aluminum titanate type crystal to be diffused into SiO₂. This firing step is the step of melting an amorphous material containing Si and joining crystal particles to each other.

In the method for manufacturing a porous ceramic member of the present invention, since a firing temperature is lower than a calcining temperature (1400°C or higher) of an aluminum titanate type crystal containing Al, Ti and Mg, it is possible to join crystal particles with an amorphous material containing Si. It is possible to suppress interdiffusion between crystal particles of elements such as Al, Mg, Si and the like and an amorphous material, and to obtain crystal particles close to the designed value without using a pore-forming material, and to obtain heat resistance and thermal decomposition resistance close to the designed value. Since firing is performed so as to heat-treat an aluminum titanate type crystal, the obtained crystal particle has no edge and has an entirely round particle shape.

By firing at the temperature of 1,350 to 1,390°C, for example, Al and Mg may diffuse into an amorphous material from aluminum titanate type crystal particles having a mean particle diameter 30 µm. However, the present inventors consider that Al and Mg diffuse to the outer peripheral portion side of the particles, and partially diffuse into the amorphous material or partially remain in the outer peripheral portion of the crystal particles, thus making it possible to give a microstructure in which the center portion and the outer peripheral portion of the crystal particles contain 10.5 atomic % or more of Al and 9 atomic % or more of Mg, and also the outer peripheral portion of the crystal particles contain a large amount of Al and Mg. The present inventors also consider that, when aluminum titanate type crystal particles has a small mean particle diameter and the firing temperature becomes higher, a given amount of Al and Mg diffuse into the amorphous material and diffusion of Al and Mg becomes in an equilibrium state in the crystal particles.

### Example 1

Examples of the present invention will be specifically described, but the present invention is not limited to these Examples.

An alumina raw material used is LS110 manufactured by Nippon Light Metal Company, Ltd., and a mean particle diameter is 1.5 µm, an amount of impurities in an alkali metal is 0.1% by mass, and an amount of impurities in silicone is 0.1% by mass. A titania raw material used is JA-3 manufactured by TAYCA Corporation, and a mean particle diameter is 0.2 µm and an amount of impurities in an alkali metal is 0.3% by mass. A magnesium carbonate raw material used is TT manufactured by Tokuyama Corporation, and an apparent specific gravity is 0.23 g/ml, and an alkali metal and silica are free from impurities. An iron oxide raw material used is JC-W manufactured by JFE Chemical Corporation, a mean particle diameter is 1.0 µm.

A silica raw material used is SP-3 manufactured by MARUKAMA Ltd., and a mean particle diameter is 1.2 µm.

First, in order to prepare an aluminum titanate type crystal powder with the composition shown in Table 1, alumina raw material, titania raw material, magnesium carbonate raw material and iron oxide raw material described above were compounded, and isopropyl alcohol (IPA) was added as a solvent. Using alumina ball each having a diameter of 10 mm as a medium, these components were mixed by a rotary mill for 20 hours to obtain a slurry. The obtained slurry was heated to 110°C thereby vaporizing IPA, dried and then passed through a mesh.

The obtained mixed powder was calcined in atmospheric air at the temperature shown in Table 1 thereby synthesizing an aluminum titanate type crystal powder containing Al, Ti, Mg and O, and thus aluminum titanate type crystal powder (calcined powder) having a mean particle diameter shown in Table 1 was obtained.

To 100 parts by mass of the crystal powder, a silica powder in the amount (parts by mass) shown in Table 1 was added, followed by mixing using an all-purpose kneader to obtain a raw powder.

To the obtained raw powder, paraffin wax was added together with isopropyl alcohol (IPA), followed by mixing and further vaporization of IPA and drying to obtain a molding powder. Then, a disk-shaped green body and a columnar green body were formed by a powder pressing method using the obtained molding powder. Each green body was fired in atmospheric air at the firing temperature shown in Table 1 for 4 hours to form disk-shaped sintered body measuring 20 mm in diameter and 10 mm in thickness and a columnar sintered body measuring 10 mm in diameter and 15 mm in height, that were used as specimens for evaluation. A temperature raising rate from room temperature to a sintering temperature was controlled to 200°C/h.

A mean particle diameter of the obtained sintered body was determined by the following procedure. Namely, the sintered body was embedded in a resin and mirror-polished, and then the mean particle diameter was determined by an intercept method using a micrograph (magnification: 500 times) of a scanning electron microscope (SEM) of the sintered body. Furthermore, porosity of the sintered body was determined by a mercury penetration method. Also, a mean pore diameter was determined by a mercury penetration method under the condition of a pore diameter of 0.1 to 900 µm. Furthermore, the percentage of pores having a pore diameter of 2 µm or less that account for all pores was determined. The results are shown in Table 2.

With respect to thermal decomposition resistance of each sintered body, each specimen of the disk-shaped sintered body was subjected to a thermal decomposition resistance test in atmospheric air at the temperature of 1,100°C for 300 hours, and thus thermal decomposition resistance was evaluated. With respect to the prepared specimens before and after the thermal decomposition resistance test, a peak intensity was measured by an X-ray diffraction method, and each peak intensity ratio A = I_{AMFT}/(I_{AMFT}+I_{T}) was calculated from a main peak intensity (I_{AMFT}) at a diffraction angle 2θ of 25 to 27° or 32 to 34° of an aluminum titanate type crystal, and a peak intensity (I_{T}) at a diffraction angle 2θ of 36.1° of a TiO₂ phase. Furthermore, on the assumption that the symbols A₀ and A₁ respectively denote a peak intensity before the thermal decomposition resistance test and a peak intensity after the thermal decomposition resistance test, the value of (1-A₁/A₀) was calculated. Separately, an aluminum titanate type crystal powder and a TiO₂ powder shown in Table 1 were mixed by varying an amount ratio, and then a thermal decomposition rate was determined by comparing a calibration curve made by determining the value of (1-I_{AMFT}/I_{T})with the value of (1 - A₁/A₀). The results are shown in Table 2.

A thermal expansion coefficient at 20°C to 800°C of specimens of a columnar sintered body was measured in accordance with JIS R1618 under the condition of a temperature raising rate of 20°C/minute.

Using a transmission electron microscope (TEM), component analysis was performed and the contents of Al, Ti, Mg, Fe and Si were measured. As a result, an amorphous material that joins crystal particles mainly contained Si, Al and Mg and, in crystal particles, the center portion contained a large amount of Ti and Fe, whereas, the outer peripheral portion contained a large amount of Al and Mg.

The strength of the sintered body was measured by the following procedure. A bar-like sintered body measuring 6 mm in width, 4 mm in thickness and 50 mm in length was made and the strength was measured by a three-point bending method in accordance with JIS R 1604. The results are shown in Table 2.

**Table 1**

| Sample No. | Raw powder | | | | Firing temperature (°C) |
|---|---|---|---|---|---|
| | Calcined powder | | | SiO₂ (parts by mass) | |
| | Calcining temperature (°C) | Kind | Mean particle diameter (µm) | | |
| 1 | 1,475 | AlMg_{0.5}Ti_{1.5}O₅ | 50 | 2 | 1,375 |
| *2 | 1,400 | Al_{0.4}Mg_{0.6}Fe_{0.4}Ti_{1. 6}O₅ | 48 | 2 | 1,500 |
| 3 | 1,475 | Al₀.₄Mg_{0.6}Fe_{0.}4Ti_{1. 6}O₅ | 50 | 2 | 1,375 |
| 4 | 1,475 | Al_{0.4}Mg_{0.6}Fe_{0.4}Ti_{1. 6}O₅ | 50 | 4 | 1,375 |
| 5 | 1,475 | Al_{0.6}Mg_{0.6}Fe_{0.2}Ti_{1.6}O₅ | 50 | 5 | 1,375 |
| 6 | 1,500 | Al_{0.4}Mg_{0.6}Fe_{0.4}Ti_{1.6}O₅ | 55 | 2 | 1,375 |
| 7 | 1,475 | Al_{0.7}Mg_{0.6}Fe_{0.1}Ti_{1.6}O₅ | 50 | 8 | 1,375 |
| *8 | 1,475 | Al_{0.4}Mg_{0.6}Fe_{0.4}Ti_{1.6}O₅ | 50 | 10 | 1,375 |
| 9 | 1,400 | Al_{0.4}Mg_{0.6}Fe_{0.4}Ti_{1.6}O₅ | 48 | 2 | 1,375 |
| 10 | 1,475 | Al_{0.4}Mg_{0.6}Fe_{0.4}Ti_{1.6}O₅ | 50 | 2 | 1,300 |
| 11 | 1,475 | Al_{0.4}Mg_{0.6}Fe_{o.4}Ti_{1. 6}O₅ | 25 | 2 | 1,375 |
| *12 | - | - | - | 2 | 1,475 |

| | | | | | |
|---|---|---|---|---|---|
| The symbol * shows a specimen that is not within the scope of the present invention. | | | | | |

**Table 2**

| Sample No. | Microstructure of sintered body | | | | Properties of sintered body | | |
|---|---|---|---|---|---|---|---|
| | | | | | Thermal decomposition resistance | Thermal expansion | Mechanical strength |
| | Mean particle diameter of crystal particles (µm) | Porosity (%) | Mean pore diameter (µm) | Proportion of pores having a diameter of 2 µm or less | Thermal decomposition rate % | Thermal expansion coefficient × 10⁻⁶/°C | Three-point bending strength MPa |
| 1 | 50 | 44 | 6 | 1 | 95 | 2.2 | 17 |
| *2 | 48 | 15 | 4 | 5 | 1 | 1.7 | 18 |
| 3 | 50 | 44 | 10 | 1 | 1 | 2.2 | 14 |
| 4 | 50 | 43 | 10 | 1 | 1 | 2.2 | 15 |
| 5 | 50 | 40 | 10 | 1 | 1 | 2.0 | 17 |
| 6 | 55 | 48 | 12 | 0 | 1 | 2.4 | 11 |
| 7 | 50 | 35 | 10 | 1 | 2 | 1.9 | 18 |
| *8 | 50 | 15 | 10 | 1 | 2 | 1.7 | 20 |
| 9 | 48 | 35 | 9 | 1 | 1 | 1.8 | 18 |
| 10 | 50 | 42 | 10 | 1 | 1 | 2.1 | 16 |
| 11 | 25 | 38 | 5 | 5 | 1 | 1.9 | 19 |
| *12 | 30 | 10 | 0.6 | 90 | 1 | 1.6 | 35 |

| | | | | | | | |
|---|---|---|---|---|---|---|---|
| The symbol * shows a specimen that is not within the scope of the present invention. | | | | | | | |

The following fact will become apparent from Tables 1 and 2. Regarding specimens of the present invention, a mixed powder was calcined at 1,400°C or higher to prepare an aluminum titanate type crystal powder having a mean particle diameter of 25 µm or more and a green body is formed using a raw powder, prepared by adding a silica powder to the obtained aluminum titanate type crystal powder, is fired at the temperature lower than the calcining temperature, whereby, aluminum titanate type crystal particles, each having mean particle diameter of 25 µm or more, can be joined to each other with an amorphous material containing Si and a porous ceramic member having a porosity of 35% or more and a mean pore diameter of 5 µm or more can be produced without adding a pore-forming material, and also large pores can be formed and the obtained porous ceramic member have a sufficient porosity and can sufficiently transmit a gas when used as a filter element.

In contrast, in specimen No. 2 having a firing temperature higher than the calcining temperature, it is apparent that a porosity is small such as 15% and a mean pore diameter is also small such as 4 µm.

Furthermore, in specimen No. 12 obtained by firing a green body composed of a mixed powder of an alumina raw material, a titania raw material, a magnesium carbonate raw material, an iron oxide raw material and a silica raw material at 1,475°C without calcination, it is apparent that the crystal particle has a mean particle diameter of 30 µ, but has a small porosity of 10% and a small mean pore diameter of 0.6 µm.

### Example 2

The raw materials of Example 1 were used as the alumina raw material, titania raw material, magnesium carbonate raw material, iron oxide raw material and silica raw material. First, in order to prepare an aluminum titanate type crystal powder composed of Al_{0.6}Mg_{0.6}Fe_{0.2}Ti_{1.6}O₅, the alumina raw material, titania raw material, magnesium carbonate raw material and iron oxide raw material described above were mixed, and isopropyl alcohol (IPA) was added as a solvent. Using alumina ball each having a diameter of 10 mm as a medium, these components were mixed by a rotary mill for 72 hours to obtain a slurry. The obtained slurry was heated to 110°C thereby vaporizing IPA, dried and then passed through a mesh.

The obtained mixed powder was calcined in atmospheric air at 1,475°C thereby synthesizing an aluminum titanate type crystal powder containing Al, Ti, Mg and Fe, and thus a crystal powder having a mean particle diameter of 30 µm was obtained.

To 100 parts by mass of the crystal powder, 2 parts by mass of a silica powder was added, followed by mixing using an all-purpose kneader to obtain a raw powder.

To the obtained raw powder, paraffin wax was added, followed by mixing and further drying to obtain a molding powder. Then, a disk-shaped green body and a columnar green body were formed by a powder pressing method using the obtained molding powder. Each green body was fired in atmospheric air at 1,375°C for 4 hours firing to form disk-shaped sintered body measuring 20 mm in diameter and 10 mm in thickness and a columnar sintered body measuring 10 mm in diameter and 15 mm in height, that were used as specimens for evaluation. A temperature raising rate from room temperature to a sintering temperature was controlled to 200°C/h.

A mean particle diameter of the obtained sintered body was determined by an intercept method using a scanning electron micrograph (magnification: 500 times). As a result, it was 50.3 µm. Also, a porosity and a mean pore diameter of the sintered body were determined by a mercury penetration method. As a result, the porosity was 42% and the mean pore diameter was 10 µm.

The obtained sintered body was formed into a thin section and microstructures of crystal particles and grain boundaries were observed by TEM (transmission electron microscope). In that case, component analysis was performed by energy dispersive X-ray spectroscopy (EDS) with respect to the position located in a depth of 0.1 µm from the surface of the crystal particle (outer peripheral portion) and the position located in a depth of 3.5 µm from the surface of the crystal particle (center portion), and the contents of Al, Ti, Mg, Fe, Si and O were measured. As a result, the content of Al was 12.3 atomic % in the outer peripheral portion or 10.5 atomic % in the center portion; the content of Mg was 9.8 atomic % in the outer peripheral portion or 9 atomic % in the center portion; the content of Ti was 42.2 atomic % in the outer peripheral portion or 48.6 atomic % in the center portion; the content of Fe was 5.6 atomic % in the outer peripheral portion or 6.8 atomic % in the center portion; and the center portion contained a large amount of Ti and Fe, whereas, the outer peripheral portion contained a large amount of Al and Mg. Also, an amorphous material that joins crystal particles mainly contained Si, Al and Mg.

Chemical resistance of each sintered body was evaluated by the following procedure. Each specimen of disk-shaped sintered bodies was dipped in a 10% by mass H₂SO₄ solution at 80°C for 50 hours and then the chemical resistance was evaluated by a weight loss per unit area.

With respect to thermal decomposition resistance of each sintered body, each specimen of the disk-shaped sintered body was subjected to a thermal decomposition resistance test in atmospheric air at the temperature of 1,100°C for 300 hours, and thus thermal decomposition resistance was evaluated. With respect to the prepared specimens before and after the thermal decomposition resistance test, a peak intensity was measured by an X-ray diffraction method, and each peak intensity ratio A = I_{AMFT}/(I_{AMFT}+I_{T}) was calculated from a main peak intensity (I_{AMFT}) at a diffraction angle 2θ of 25 to 27° or 32 to 34° of an aluminum titanate type crystal, and a peak intensity (I_{T}) at a diffraction angle 2θ of 36.1° of a TiO₂ phase. Furthermore, on the assumption that the symbols A₀ and A₁ respectively denote a peak intensity before the thermal decomposition resistance test and a peak intensity after the thermal decomposition resistance test, the value of (1-A₁/A₀) was calculated. Separately, an aluminum titanate type crystal powder composed of Al_{0.6}Mg_{0.6}Fe_{0.2}Ti_{1.6}O₅ and a TiO₂ powder shown in Table 1 were mixed by varying an amount ratio, and then a thermal decomposition rate was determined by comparing a calibration curve made by determining the value of (1-I_{AMFT}/I_{T}) with the value of (1 - A₁/A₀).

A thermal expansion coefficient at 20°C to 800°C of specimens of a columnar sintered body was measured in accordance with JIS R1618 under the condition of a temperature raising rate of 20°C/minute.

As a result, the obtained columnar sintered body showed satisfactory properties, for example, low chemical resistance such as 9 mg/cm², a thermal decomposition rate of 1% and a thermal expansion coefficient of 2.1 × 10⁻⁶/°C.

Using the above molding powder, a bar-like green body was made by a powder pressing method and the green body was fired in atmospheric air at 1,375°C for 4 hours to obtain a sintered body measuring 6 mm in width, 4 mm in thickness and 50 mm in length, that were used as specimens for examination of the strength and a state of micocracks. The strength of the sintered body was measured by a three-point bending method in accordance with JIS R 1664. As a result, the bending strength was 13 Mpa. The state of microcracks was measured by a nitrogen gas adorption apparatus ASAP2000 manufactured by Micromeritics, Inc. As a result, a micro pore volume was 0.31 × 10⁻⁶ m³/kg and a center micro pore diameter was 18.1 nm.

In the same manner as in Example 2, except that the silica powder was added in the amount of 2 parts by mass based on 100 parts by mass of the crystal powder and that the firing temperature was controlled to 1,500°C, a sintered body of Comparative Example was made. The obtained sintered body had a mean particle diameter of 35 µm, a porosity of 20% and a mean pore diameter of 7 µm.

The obtained sintered body showed high chemical resistance of 14 mg/cm², a thermal decomposition rate of 1% and a thermal expansion coefficient of 2.8 × 10⁻⁶/°C, and thus it is apparent that chemical resistance is poor. The present inventors consider that, since the firing temperature is such a high temperature as 1,500°C, Al and Mg in a crystal powder diffused into an amorphous material and the contents of Al and Mg in crystal particles decreased, resulting in deterioration of the chemical resistance. The strength as measured by a three-point bending method of the sintered body was 9 Mpa. The micro pore volume of microcracks was 0.45 × 10⁻⁶ m³/kg and the center micro pore diameter was 16.1 nm.

### Example 3

In the same manner as in Example 2, except that the silica powder was added in the amount of 3 parts by mass based on 100 parts by mass of the crystal powder and that the firing temperature was controlled to 1,350°C, a sintered body was made. The obtained sintered body had a mean particle diameter of 49.8 µm, a porosity of 42% and a mean pore diameter of 10 µm.

As a result of composition analysis of crystal particles, the content of Al was 13.3 atomic % in the outer peripheral portion or 11.2 atomic % in the center portion; the content of Mg was 12.3 atomic % in the outer peripheral portion or 11 atomic % in the center portion; the content of Ti was 35.6 atomic % in the outer peripheral portion or 38.6 atomic % in the center portion; the content of Fe was 4.8 atomic % in the outer peripheral portion or 4.9 atomic % in the center portion; and the center portion contained a large amount of Ti and Fe, whereas, the outer peripheral portion contained a large amount of Al and Mg. Also, an amorphous material that joins crystal particles mainly contained Si, Al and Mg.

As a result, the obtained sintered body showed satisfactory properties, for example, low chemical resistance such as 8 mg/cm², a thermal decomposition rate of 1% and a thermal expansion coefficient of 2.0 × 10⁻⁶/°C. The strength as measured by a three-point bending method of the sintered body was 14 Mpa. The micro pore volume of microcracks was 0.30 × 10⁻⁶ m³/kg and the center micro pore diameter was 18.9 nm

### Example 4

In the same manner as in Example 2, except that the calcining temperature, the mean particle diameter of the calcined powder, the additive amount of the silica powder and the firing temperature were varied as shown in Table 3, a sintered body was made, and a mean pore diameter, a porosity, a thermal expansion coefficient and a three-points bending strength of the sintered body as well as a micro pore volume of microcracks were determined. The results are shown in Table 4.

**Table 3**

| Sample No. | Raw powder | | | | Firing temperature (°C) |
|---|---|---|---|---|---|
| | Calcined powder | | | SiO₂ (parts by mass) | |
| | Calcining temperature (°C) | Aluminum titanate type crystal powder | Mean particle diameter | | |
| 13 | 1450 | Al_{0.6}Mg_{0.6}Fe_{0.2}Ti_{1.6}O₅ | 50.1 | 5 | 1,375 |
| 14 | 1475 | Al_{0.6}Mg_{0.6}Fe_{0.2}Ti_{1.6}O₅ | 49.8 | 5 | 1,375 |
| 15 | 1490 | Al_{0.6}Mg_{0.6}Fe_{0.2}Ti_{1.6}O₅ | 49.9 | 5 | 1, 375 |
| 16 | 1500 | Al_{0.6}Mg_{0.6}Fe_{0.2}Ti_{1.6}O₅ | 49.9 | 5 | 1,375 |
| 17 | 1525 | Al_{0.6}Mg_{0.6}Fe_{0.2}Ti_{1.6}O₅ | 50.0 | 5 | 1,375 |

**Table 4**

| Sample No. | Porosity (%) | Mean pore diameter (µm) | Thermal expansion coefficient (× 10⁻⁶/°C) | Strength (Mpa) | Micro pore volume (× 10⁻⁶ m³/kg) |
|---|---|---|---|---|---|
| 13 | 40 | 10 | 2.0 | 18 | 0.28 |
| 14 | 40 | 10 | 2.0 | 17 | 0.31 |
| 15 | 40 | 10 | 2.1 | 16 | 0.40 |
| 16 | 40 | 10 | 2.1 | 14 | 0.45 |
| 17 | 40 | 10 | 2.1 | 14 | 0.46 |

As is apparent from specimens Nos. 13 to 16 in Tables 3 and 4, the strength increases when the micro pore volume of microcracks is 0.40 × 10⁻⁶ m³/kg or less. Brief Description of Reference Numeral

- 1:: Filter element
- 2:: Outer peripheral wall
- 3:: Cell
- 4:: Partition
- 11:: Crystal particles
- 11a:: Center portion of crystal particle
- 11b:: Outer peripheral portion of crystal particle
- 13:: Amorphous material

## Claims

1. A porous ceramic member formed by joining crystal particles (11) of aluminum titanate type one another with an amorphous material (13) containing Si, the crystal particles (11) containing Al, Ti, Mg and O and having a mean particle diameter 25 µm or more,
wherein the porosity of the porous ceramic member is 35% or more and the mean pore diameter of the porous ceramic member is 5 µm or more,
**characterized in that**
the crystal particles (11) contain 10.5 atomic % or more of Al and 9 atomic % or more of Mg in a center portion (11a) thereof and an outer peripheral portion (11b) outside of the center portion (11a), respectively, and
each of contents of Al and Mg that exist in the outer peripheral portion (11b) of the crystal particle (11) is more than each of contents of Al and Mg that exist in the center portion (11a of the crystal particle (11).

2. The porous ceramic member according to claim 1, wherein the percentage of pores having a pore diameter of 2 µm or less is 5% or less of all pores.

3. The porous ceramic member according to claim 1 or 2, wherein the micro pore volume is 0.40×10⁻⁶ m³/kg or less when micro pores are analyzed by a nitrogen gas adsorption method.

4. The porous ceramic member according to any one of claims 1 to 3, wherein said Si is contained in an amount of 2 to 5% by mass in terms of SiO₂.

5. The porous ceramic member according to any one of claims 1 to 4,
wherein Fe is contained in the crystal particles (11).

6. A filter comprising a filter element (1) composed of the porous ceramic member according to any one of claims 1 to 5.

## Patentansprüche

1. Poröses Keramikelement, welches durch ein Verbinden von aus einer Aluminium-Titanatart bestehenden Kristallpartikeln (11) mit einem Si enthaltenden amorphen Material (13) ausgebildet ist, wobei die Kristallpartikel (11) Al, Ti, Mg und O umfassen und einen Durchschnittspartikeldurchmesser von 25 µm oder mehr aufweisen,
wobei die Porosität des porösen Keramikelements 35 % oder mehr ist und der Durchschnittsporendurchmesser des porösen Keramikelements 5 µm oder mehr ist,
**dadurch gekennzeichnet,**
**dass** die Kristallpartikel (11) jeweils 10,5 Atomprozent oder mehr von Al und 9 Atomprozent oder mehr von Mg in einem Mittelabschnitt (11a) davon und einen äußeren Randabschnitt (11 b) außerhalb des Mittelabschnitts (11a) enthalten, und
**dass** jeder der Inhalte von Al und Mg, welche in dem äußeren Randabschnitt (11 b) der Kristallpartikel (11) vorkommen, mehr als jeder der Inhalte von Al und Mg, welche in dem Mittelabschnitt (11a) des Kristallpartikels (11) vorkommen, ist.

2. Poröses Keramikelement nach Anspruch 1, wobei der Prozentsatz von Poren, welche einen Porendurchmesser von 2 µm oder weniger aufweisen, 5 % oder weniger von allen Poren ist.

3. Poröses Keramikelement nach Anspruch 1 oder 2, wobei das Mikroporenvolumen 0,4 x 10⁻⁶ m³/kg oder weniger ist, wenn Mikroporen durch eine Stickstoffgasadsorptionsmethode analysiert werden.

4. Poröses Keramikelement nach einem der Ansprüche 1 bis 3, wobei das Si in einer Menge von 2 bis 5 % Masse hinsichtlich SiO₂ enthalten ist.

5. Poröses Keramikelement nach einem der Ansprüche 1 bis 4, wobei Fe in den Kristallpartikeln (11) enthalten ist.

6. Filter umfassend ein Filterelement (1), welches aus dem porösen Keramikelement nach einem der Ansprüche 1 bis 5 besteht.

## Revendications

1. Élément en céramique poreuse formé par assemblage de particules cristallines (11) de type titanate d'aluminium les unes avec les autres avec un matériau amorphe (13) contenant Si, les particules cristallines (11) contenant Al, Ti, Mg et O et ayant un diamètre de particule moyen de 25 µm ou plus,
la porosité de l'élément en céramique poreuse étant de 35 % ou plus et le diamètre de pore moyen de l'élément en céramique poreuse étant de 5 µm ou plus,
**caractérisé en ce que**
les particules cristallines (11) contiennent 10,5 % atomique ou plus de Al et 9 % atomique ou plus de Mg dans une partie centrale (11a) de celles-ci et une partie périphérique externe (11b) à l'extérieur de la partie centrale (11a), respectivement, et
chacune des teneurs en Al et Mg qui est présente dans la partie périphérique externe (11b) de la particule cristalline (11) est supérieure à chacune des teneurs en Al et Mg qui est présente dans la partie centrale (11a) de la particule cristalline (11).

2. Élément en céramique poreuse selon la revendication 1, dans lequel le pourcentage de pores ayant un diamètre de pore de 2 µm ou moins est de 5 % ou moins de la totalité des pores.

3. Élément en céramique poreuse selon la revendication 1 ou 2, dans lequel le volume de micropores est de 0,40 x 10⁻⁶ m³/kg ou moins lorsque les micropores sont analysés par un procédé d'adsorption de gaz d'azote.

4. Élément en céramique poreuse selon l'une quelconque des revendications 1 à 3, dans lequel ledit Si est présent en une quantité de 2 à 5 % en masse en termes de SiO₂.

5. Élément en céramique poreuse selon l'une quelconque des revendications 1 à 4,
dans lequel Fe est présent dans les particules cristallines (11).

6. Filtre comprenant un élément filtrant (1) composé de l'élément en céramique poreuse selon l'une quelconque des revendications 1 à 5.
